# FASCICULE DE BREVET EUROPEEN

(11) **EP 4 164 762 B1**
(45) Date de publication et mention de la délivrance du brevet: **18.10.2023**
(21) Numéro de dépôt: 21745336.4
(22) Date de dépôt: 15.07.2021
(51) Int. Cl.: A63G 33/00, A63G 5/00, A63G 1/00, A63F 13/00

(54) **ATTRACTION, PROCEDE DE MISE EN OEUVRE, PROGRAMME D'ORDINATEUR ET SUPPORT LISIBLE PAR ORDINATEUR**
ATTRAKTION, VERFAHREN ZUR IMPLEMENTIERUNG DAVON, COMPUTERPROGRAMM UND COMPUTERLESBARES MEDIUM
ATTRACTION, METHOD FOR IMPLEMENTING SAME, COMPUTER PROGRAM AND COMPUTER-READABLE MEDIUM

(30) Priorité: 16.07.2020 BE 202005533
(43) Date de publication de la demande: 19.04.2023
(73) Titulaire: Alterface Holdings, 1300 Wavre (BE)
(72) Inventeur: SAINTON, Etienne, 1030 Schaerbeek (BE); BATTAILLE, Stéphane, 1470 Bousval (BE)
(74) Mandataire: Gevers Patents
(86) Numéro de dépôt international: PCT/EP2021/069852
(87) Numéro de publication internationale: WO 2022/013394

(56) Documents cités:
- WO-A1-2019/147416
- CN-U- 207 694 242
- US-A1- 2013 145 953
- US-B1- 10 279 274

## Description

### Domaine technique

La présente invention concerne une attraction, un procédé de mise en oeuvre de l'attraction, un programme d'ordinateur et un support lisible par ordinateur.

### Art antérieur

Il existe une attraction appelée « laser game » selon laquelle, des groupes de participants à pieds formant deux équipes dans une grande salle obscure se tirent dessus avec des lasers. Un des buts est que les équipes touchent le plus de fois possible les participants de l'autre équipe.

L'inconvénient d'une telle attraction est que le débit de participants est faible car le nombre de personnes par équipe est limité. De plus, l'attraction se déroule dans une salle spacieuse dans laquelle sont disposés des obstacles. Une telle attraction est donc encombrante par rapport au faible débit de participants. En outre, les participants ont tendance à courir dans la salle obscure, ce qui est dangereux du fait que les participants peuvent se heurter et se blesser.

Il y a donc un besoin pour une attraction qui soit moins encombrante et qui offre un débit de participants plus élevé.

Les publications US 2013/145953 A1, WO 2019/147416 A1 et CN 207 694 242 U divulguent chacune une attraction comprenant des véhicules ainsi que des moyens d'affichage d'images pour des participants dans les véhicules.

Le document US 2013/145953 A1 en particulier décrit un manège avec une piste en boucle fermée et des véhicules, un véhicule pouvant être transféré devant un simulateur équipé d'un écran digital et placé à coté de la piste; les véhicules sont équipés de dispositifs interactifs permettant une interaction coopérative ou individuelle avec l'environnement affiché sur l'écran.

### Exposé de l'invention

À cet effet, l'invention propose une attraction comprenant :
- des cibles interactives,
- une pluralité de véhicules mobiles entre plusieurs positions fixes, les véhicules étant destinés à véhiculer des participants de l'attraction,
- des émetteurs équipant les véhicules pour interagir avec les cibles, dans les positions fixes des véhicules, les émetteurs d'une paire de véhicules étant en interaction avec la même cible.

L'invention se rapporte à une attraction comprenant des cibles interactives et une pluralité de véhicules mobiles entre plusieurs positions fixes. Les véhicules sont destinés à véhiculer des participants de l'attraction. Les véhicules sont équipés d'émetteurs pour interagir avec les cibles. Dans les positions fixes des véhicules, les émetteurs d'une paire de véhicules sont en interaction avec la même cible.

Dans chaque position fixe des véhicules, chaque véhicule forme une paire avec un véhicule différent. Cela permet de varier les équipes d'adversaires pour faire un tournoi. Un groupe de participants d'un certain véhicule active les émetteurs pour être en interaction avec une cible qui est la même qu'un autre groupe de participants d'un autre véhicule ; l'attraction permet d'embarquer un nombre important de participants dans les véhicules afin de favoriser le débit de participants tout étant permettant d'avoir un encombrement réduit de l'attraction. En outre, la mise en oeuvre de l'invention n'est pas onéreuse. Un autre avantage est qu'il n'y a pas de moment creux car tout le monde joue en même temps.

Dans l'attraction, chaque véhicule véhicule une équipe de participants. Lorsqu'un participant fait une partie dans l'attraction, tout en restant dans le même véhicule, il participe à plusieurs manches, chaque manche correspondant à une position fixe et à une équipe d'adversaires différente. Entre les manches, il change de position fixe, et d'équipe d'adversaires.

Il est possible, tout en restant dans le cadre de l'invention, que les émetteurs de plus de deux véhicules interagissent avec la même cible dans chaque position fixe. En particulier, si X est le nombre de véhicules dont les émetteurs interagissent avec une même cible dans chaque position fixe, X est un entier plus grand que 1, préférentiellement égal à 2 ou 3, et le nombre de véhicules de l'attraction est égal à X fois le nombre de cibles.

Les mouvements des véhicules sont contrôlés par un programme d'ordinateur, qui tourne préférentiellement sur un système informatique faisant partie de l'attraction (bien qu'il ne soit pas nécessairement situé dans l'enceinte de l'attraction).

Selon une variante, les participants d'un véhicule sont visibles par les participants de l'autre véhicule de la paire de véhicules dans la position fixe des véhicules.

Selon une variante, les véhicules sont mobiles en rotation et/ou en translation.

Selon une variante, l'attraction comprend des supports supportant chacun au moins deux véhicules, les supports étant mobiles en rotation et/ou en translation entre les positions fixes des véhicules. Les supports simplifient la mise en oeuvre des déplacements de véhicules. Le nombre de véhicules par support est préférentiellement égal à 2 ou 3. En effet, avec un seul véhicule, le débit de l'attraction serait faible, à partir de quatre véhicules les angles pourraient trop petits pour une bonne répartition sur les cibles.

Selon une variante, l'attraction comprend trois supports, chaque support ayant deux véhicules, de préférence l'attraction comprend quatre supports, chaque support ayant trois véhicules.

Selon une variante, l'attraction comprend en outre une plateforme mobile en rotation, entraînant les supports et les véhicules.

Selon une variante, les cibles sont des écrans diffusant des images à intercepter avec les émetteurs. Les images sont préférentiellement contrôlées via un programme d'ordinateur tournant sur le système informatique.

Selon une variante, les cibles sont des écrans disposés autour d'une zone de déplacement des véhicules et/ou en hauteur par rapport aux véhicules.

L'invention propose en outre un procédé de mise en oeuvre d'une attraction, comprenant les étapes de
- déplacement des véhicules vers une position fixe, de sorte que, dans chaque position fixe des véhicules, les véhicule forme des paires avec un véhicule différent,
- dans la position fixe des véhicules, activation des émetteurs d'une paire de véhicules par les participants de ces véhicules pour interagir avec la même cible,
- répétition des étapes précédentes.

Le procédé correspond préférentiellement à une participation à l'attraction. Selon une variante, il y a au moins deux positions fixes dans lesquelles les participants activent les émetteurs pour interagir avec des cibles différentes.

Comme dans chaque position fixe des véhicules, les véhicules forment des paires avec un véhicule différent, les équipes changent d'équipe adversaire entre chaque position fixe.

Selon une variante, les véhicules prennent au moins trois positions fixes, de préférence quatre positions fixes. Ainsi, chaque partie sur l'attraction comprend au moins trois ou quatre manches.

L'invention propose en outre un programme comprenant les instructions qui conduisent l'attraction à exécuter les étapes du procédé selon l'une des revendications, et un support lisible par ordinateur, sur lequel est enregistré ledit programme.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », « troisième », etc. sont, quant à eux, utilisés dans le cadre de ce document exclusivement pour différencier différents éléments, et ce sans impliquer d'ordre entre ces éléments.

L'ensemble des modes de réalisation préférés ainsi que l'ensemble des avantages de l'attraction selon l'invention se transposent mutatis mutandis au procédé de mise en oeuvre de l'attraction, au programme d'ordinateur et au support lisible par ordinateur - et inversement.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 illustre une vue schématique de l'attraction ;
- la figure 2 illustre une autre vue schématique de l'attraction ;
- la figure 3 illustre une autre vue schématique de l'attraction ;
- la figure 4 illustre une autre vue schématique de l'attraction ;
- la figure 5 illustre une vue en coupe de l'attraction.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

Cette partie présente une description détaillée de modes de réalisation préférés de la présente invention. Cette dernière est décrite avec des réalisations particulières et des références à des figures mais l'invention n'est pas limitée par celles-ci. En particulier, les dessins ou figures décrits ci-dessous ne sont que schématiques et ne sont pas limitants.

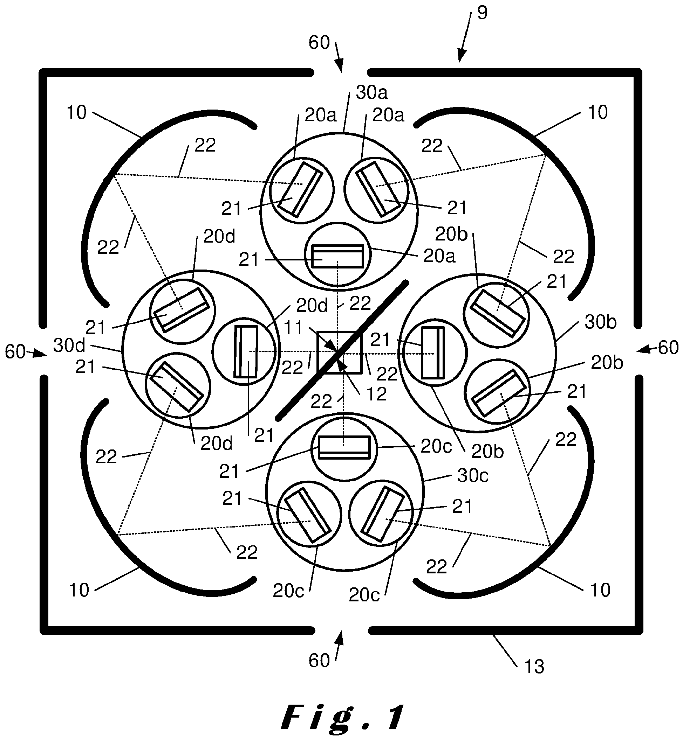

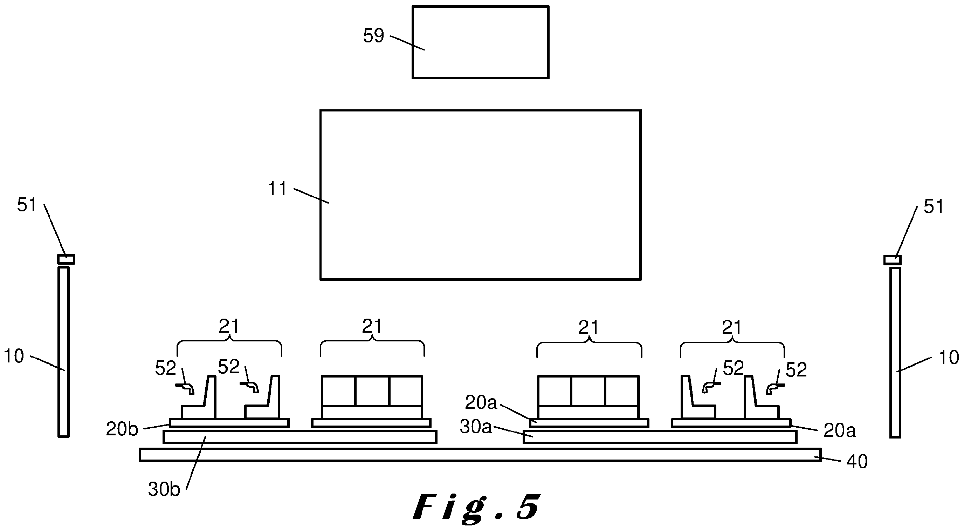

La figure 1 illustre une vue schématique de l'attraction. L'attraction 9 comporte des cibles 10, 11, 12 interactives. Une pluralité de véhicules 20 sont mobiles entre plusieurs positions fixes ; les véhicules 20 véhiculent les participants de l'attraction. Dans les positions fixes, les véhicules, et donc les participants, sont en regard des cibles afin d'interagir avec la cible. Les véhicules 20 sont équipés d'émetteurs (visibles sur la figure 5) que les participants activent pour interagir avec les cibles selon les lignes 22. Dans une position fixe telle que visible sur la figure 1, une paire de véhicules sont en regard d'une même cible et les émetteurs de ces deux véhicules entrent en interaction avec cette cible par activation par les participants véhiculés par ces deux véhicules.

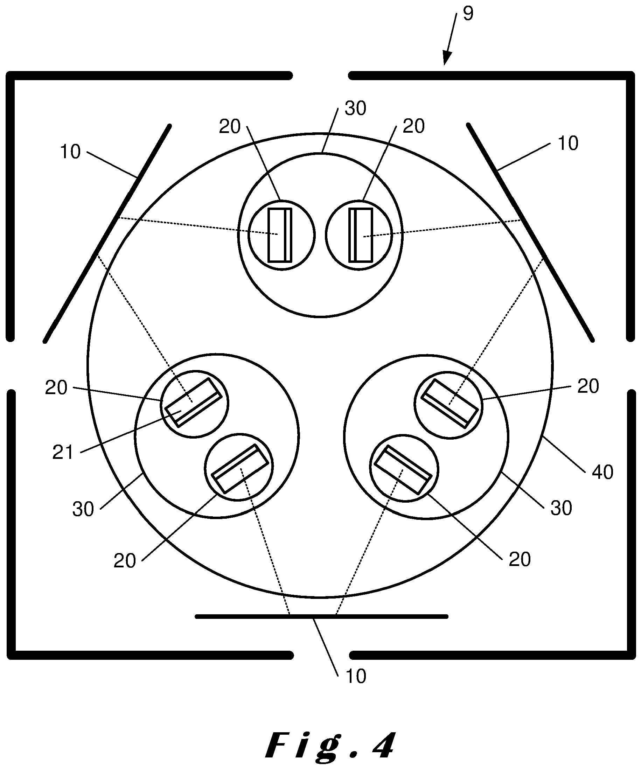

Le but de l'attraction est que les participants touchent le plus possible de cibles 10, 11, 12. Les cibles 10, 11, 12 peuvent être des écrans sur lesquels sont projetés des images telles que des animations ou des écrans LCD ou plasma de grande taille - par exemple de 6 mètres de long. Les animations peuvent être en deux-dimensions ou en trois-dimensions pour rendre l'attraction plus palpitante. Les participants peuvent porter des lunettes 3D. Comme le montre les figures 1-3, les écrans peuvent être concaves afin d'augmenter la superficie de projection. Ceci améliore l'expérience des participants. Comme le montre la figure 4, les écrans peuvent aussi être plats, afin de réduire leur encombrement et faciliter l'installation. Les cibles peuvent être disposées autour de la zone de déplacement des véhicules tels que cela est le cas pour les cibles 10 sur la figure 1 ; ceci permet de disposer de cible de grandes tailles. Les cibles 10 peuvent être à des hauteurs différentes pour donner un effet de surprise aux participants. Les cibles 11, 12 sont au centre de la zone de déplacement des véhicules afin d'offrir un positionnement de la cible supplémentaire. Les cibles 11, 12 peuvent être fixées à la plateforme 40 ou au plafond. De préférence, les cibles 11, 12 sont en hauteur par rapport véhicules, à la verticale du centre de la zone de déplacement, comme visible sur la figure 5, ce qui permet de réduire l'encombrement au sol de l'attraction sans entraver le déplacement des véhicules. Les cibles 11, 12 sont sur chaque face d'un écran central. Une combinaison de la disposition des cibles 10, 11, 12 permet de varier l'intérêt de l'attraction, sans pour autant perturber le mouvement des véhicules ni augmenter l'encombrement de l'attraction. Les cibles 10, 11, 12 peuvent être immobiles ce qui facilite leur installation ; les cibles 10, 11, 12 peuvent aussi être mobiles pour augmenter les angles d'interaction des émetteurs manipulés par les participants. Par exemple, les cibles 11, 12 peuvent pivoter sur elle-même comme cela est visible entre les figures 1 à 3.

Les véhicules 20 sont mobiles en ce sens que leur position et localisation varient au cours de l'attraction. La mobilité des véhicules entre deux positions fixes permet de proposer des cibles différentes aux participants, ce qui augmente l'intérêt de l'attraction. Le mouvement des véhicules entre deux positions fixes est aléatoire. Quand bien même le mouvement peut être programmé à l'avance, le mouvement est imprédictible par les participants et est différent pour passer d'une position fixe à une nouvelle position fixe. Ceci permet de désorienter les participants. La mobilité des véhicules est assurée en rotation sur eux-mêmes ; l'avantage est qu'en une même localisation dans l'attraction, le véhicule peut offrir plusieurs positions angulaires pour permettre l'interaction avec diverses cibles. En plus, le mouvement de rotation désoriente les participants. La mobilité peut aussi être assurée en translation ; ceci permet de faire varier la distance avec les cibles et l'interaction avec diverses cibles. On peut aussi envisager une mobilité qui soit une combinaison de rotation et de translation afin de bénéficier de tous les avantages mentionnés.

Les véhicules 20 atteignent des positions fixes après un déplacement. Les positions sont fixes dans le sens ou le mouvement des véhicules 20 s'arrêtent. L'immobilité des véhicules met alors les participants en mesure d'interagir avec les cibles 10, 11, 12 à l'aide des émetteurs 52. La pluralité des positions fixes permet de faire varier les cibles avec lesquels les participants interagissent - notamment en proposant des ambiances différentes selon les cibles ou en proposant des cibles avec des positions différentes (par exemple autour ou au-dessus des véhicules) pour captiver l'attention des participants.

Dans les positions fixes des véhicules, les émetteurs 52 d'une paire de véhicules sont en interaction avec la même cible. En bas à droite de la figure 1, un véhicule 20b et un véhicule 20c constituent une paire, dont les émetteurs peuvent interagir avec la même cible 10 selon les traits 22. Il en va par exemple de même pour deux véhicules 20b et 20a, en haut à droite de la figure 1, constituant une paire et interagissant avec la même cible 10 (potentiellement différente de la précédente) selon les traits 22. Au centre de la figure 1, deux véhicules 20b et 20c constituent une paire, dont les émetteurs peuvent interagir avec la même cible 12 selon les traits 22. L'interaction avec une même cible permet de mettre les participants formant une équipe sur un véhicule en compétition avec d'autres participants formant une autre équipe sur un autre véhicule. Ceci permet de faire des duels entre plusieurs équipes tout en évitant que les participants se heurtent les uns aux autres et se blessent.

Les participants d'un véhicule 20 sont visibles par les participants de l'autre véhicule 20 de la paire de véhicules dans la position fixe des véhicules. Par exemple sur la figure 1, les participants des paires véhicules 20b, 20c (en bas à droite) ou 20a, 20b (en haut à droite) ou 20d, 20a (au centre) se voient entre eux. Cela stimule la volonté des participants d'interagir avec les cibles.

Il est envisageable que dans chaque position fixe, les émetteurs 52 de chaque véhicule soient en interaction avec la même cible. Après le déplacement, les véhicules peuvent revenir alors à la même localisation. Les paires de véhicules restent alors les mêmes, les mêmes participants s'affrontent durant l'attraction. On peut alors envisager que l'animation sur une même cible varie.

De préférence, dans chaque position fixe des véhicules 20, les émetteurs 52 des véhicules sont en interaction avec une cible différente. Ceci permet de rendre l'attraction plus palpitante, les participants se demandant pendant le déplacement du véhicule quelle localisation sera atteinte. En outre, dans chaque position fixe, les véhicules forment une paire avec un véhicule différent ; cela permet de mettre en compétition des participants d'un véhicule avec tout ou partie des autres participants sur les autres véhicules. Un tournoi est donc organisé entre les véhicules qui se déroule en manches successives à chaque position fixe. Ainsi les participants sont confrontés avec plus d'équipes sans pour autant augmenter l'encombrement de l'attraction.

L'attraction 9 peut comprendre en outre des supports 30a, 30b, 30c, 30d supportant chacun au moins deux véhicules 20. Les supports 30 peuvent être des plateaux, par exemple de 8 mètres de diamètre. Les supports sont mobiles en rotation et/ou en translation entre les positions fixes des véhicules 20. En d'autres termes, les supports 30 entraînent les véhicules 20 en mouvement vers leurs positions fixes. Les supports 30 permettent le déplacement de groupes de véhicules, ce qui augmente les déplacements et les positions fixes possibles des véhicules et donc de possibilité de paires de véhicules en interaction avec les cibles.

Selon la figure 4, l'attraction peut en outre comporter une plateforme 40 entraînant les supports 30 et les véhicules 20 vers les positions fixes. La plateforme 40 est mobile en rotation. Une telle plateforme facilite le montage de l'attraction. Les supports 30 peuvent être montés en rotation et/ou en translation sur la plateforme, ce qui permet d'augmenter les déplacements possibles des véhicules 20. La plateforme peut être présente sur l'attraction des figures 1-3. La plateforme a par exemple un diamètre de 20 mètres.

Le nombre de véhicule n'est pas limité. Les figures 1-3 montrent douze véhicules 20 répartis sur quatre supports 30. Dans les positions fixes représentées, deux véhicules sur chaque support est en regard d'une cible 10 en périphérie de la zone de déplacement. Le dernier véhicule de chaque support est en regard d'une cible 11 ou 12 centrale, de préférence située au-dessus des véhicules. La figure 4, montre six véhicules répartis sur trois supports 30. Les véhicules sont tous en regard des cibles 10 périphériques. Dans la position fixe représentée, une paire de véhicule en regard d'une même cible 10 en périphérie de la zone de déplacement est formée par un véhicule sur deux supports 30 différents.

Le mouvement des véhicules est une combinaison du mouvement propre des véhicules (en rotation et/ou translation) et du mouvement des supports (en rotation et/ou translation). De préférence, les véhicules 20 sont mobiles en rotation sur les supports 30, les supports étant eux-mêmes mobiles en rotation. Ainsi, le mouvement des véhicules est une combinaison de deux mouvements de rotation ce qui augmente les déplacements possibles des véhicules.

Les véhicules 20 comportent des stations individuelles pour accueillir les participants et assurer leur sécurité durant l'attraction. Selon la figure 5, les stations sont des fauteuils 21 pour assurer le confort et la stabilité des participants ; il peut aussi s'agir de banquettes. Les fauteuils 21 ou banquettes peuvent être disposés selon deux rangées comme cela est visible pour le véhicule 20b sur la gauche de la figure ou 20a sur la droite de la figure. Des ceintures ou des harnais assurent la sécurité des participants. Il peut aussi s'agir de stations debout ce qui permet de mettre plus de participants sur un véhicule. Les véhicules font par exemple 3 mètres de long. Les véhicules peuvent vibrer ou s'incliner pour améliorer encore l'expérience des participants.

La figure 5 montre les émetteurs 52. Les émetteurs 52 assurent l'interactivité avec les cibles 10, 11, 12 et permettent aux participants de marquer des points lorsque les cibles sont correctement touchées. En particulier, les participants cherchent à intercepter les images diffusées sur cibles avec les émetteurs 52. De préférence, les émetteurs 52 ne sont actifs que dans les positions fixes des véhicules 20 afin d'éviter les tirs durant les déplacements des véhicules. Également les émetteurs d'un véhicule peuvent être en interaction uniquement avec la cible 10, 11, 12 partagée avec l'autre véhicule de la paire. Ceci permet d'éviter des tirs sur d'autres cibles et donc l'altération des résultats. Les émetteurs 52 permettent de faire monter la pression ludique entre les participants une fois en leurs mains. Les émetteurs 52 sont aisés à tenir en main, même avec le mouvement rapide, notamment en rotation, des véhicules 20. Les émetteurs 52 sont d'utilisation simple, même dans le cas où les participants ont devant eux des fauteuils avec un dossier haut. Les émetteurs 52 sont par exemple des pointeurs lasers et sont par exemple sous la forme d'un pistolet. Des caméras 51 permettent de détecter le signal des émetteurs. Les caméras 51 peuvent être positionnées sur le sommet des cibles.

Un état des scores par participants et/ou par véhicules est disponible en temps réel sur un écran 59 visible sur la figure 5. L'écran 59 est par exemple au-dessus des véhicules et visible par tous les participants. Un écran à l'extérieur de l'attraction est envisageable pour permettre le suivi à distance de l'attraction. Les véhicules peuvent éventuellement des affichages embarqués fournissant le classement ainsi que le score individuel au fur et à mesure de la partie. En fin de partie, les participants peuvent récupérer une feuille de statistiques. Des écrans à l'extérieur de l'attraction peuvent aussi afficher les statistiques des joueurs, ainsi que les meilleurs scores de la journée et/ou depuis la mise en service de l'attraction.

L'attraction 9 comporte une enceinte 13 dans laquelle la pénombre règne pendant le temps de l'attraction. Les participants des paires de véhicule dans les positions sont en mesure de se voir grâce à la luminosité des cibles ou à des jeux de lumières. L'occupation ou l'évacuation de l'attraction est faite de manière simultanée par les participants, c'est-à-dire non séquentielle. Ceci permet de réduire les temps morts entre chaque mise en oeuvre de l'attraction. Des accès 60 en entrée et sortie sont prévues. Les accès 60 sont disposés autour de la zone de déplacement des véhicules de sorte à permettre de telles occupation et évacuation. Sur les figures 1-4, quatre sorties sont prévues à titre d'exemple. Pour occuper les véhicules (ou pour les évacuer), les participants se rapprochent du véhicule le plus proche de l'accès. En fin d'attraction, les supports et véhicules sont arrêtés de sorte à permettre l'évacuation et l'occupation suivante par les participants de manière efficace. Sur les figures 1-3, les accès 60 sont en regard des supports 30 ; sur la figure 4, les véhicules sont arrêtés dans une position telle que le chemin entre les véhicules 20 et les accès soit le plus court possible. On peut aussi envisager que certains accès 60 soient pour l'entrée dans l'attraction uniquement et d'autres en sortie uniquement.

L'enceinte 13 peut être décorée pour donner aux participants une impression d'évènement sportif. Des écrans peuvent diffuser des bandes annonces. Une atmosphère de match de boxe peut être reproduite avec des cris de supporters, une lumière brute et de la musique. Les bandes audios, les lumières, un écran affichant les résultats, des vitesses croissantes des véhicules contribuent à augmenter de manière ludique la pression sur les participants.

L'invention se rapporte aussi à un procédé de mise en oeuvre de l'attraction 9. Au cours du procédé, les véhicules 20 sont déplacés vers une position fixe ; dans cette position, les participants d'une paire de véhicules activent les émetteurs 52 pour interagir avec la même cible. Dans les positions fixes, les véhicules, et donc les participants, sont en regard des cibles afin d'interagir avec la cible. Puis le procédé répète ces étapes selon un nombre prédéfini de fois.

Les figures 1-3 montrent l'alternance des étapes de procédé.

Sur la figure 1, les supports 30 supportant les véhicules 20 sont aux quatre points cardinaux. Dans cette position fixe des véhicules, les émetteurs 52 d'un premier véhicule 20a interagissent selon la ligne 22 avec la même cible 10 périphérique que les émetteurs 52 d'un premier véhicule 20d de la paire, en haut à gauche de la figure 1 ; les émetteurs 52 d'un deuxième véhicule 20a interagissent selon la ligne 22 avec la même cible 10 périphérique que les émetteurs 52 d'un premier véhicule 20b de la paire, en haut à droite de la figure 1. Au centre de l'attraction, les émetteurs 52 d'un troisième véhicule 20a interagissent selon la ligne 22 avec la même cible 11 centrale que les émetteurs 52 d'un deuxième véhicule 20d de la paire. Sur la figure 1, les véhicules 20 de chaque support forme une paire avec un véhicule d'un autre support.

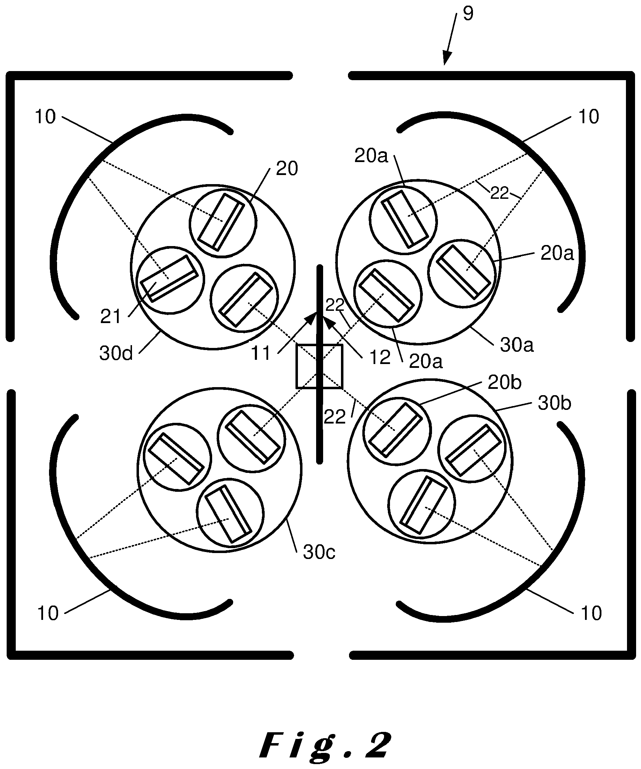

Sur la figure 2, les véhicules ont été déplacés jusqu'à une nouvelle position fixe, telle que les supports sont décalés d'environ 45°. Le déplacement des supports 30 et des véhicules 20 peut être plus important qu'un simple décalage des supports de 45°. Les véhicules 20 et les supports 30 peuvent se déplacer durant plusieurs secondes ou minutes selon un mouvement aléatoire pour aboutir à la position de la figure 2. Sur la figure 2, les émetteurs 52 d'un premier et deuxième véhicules 20a du même support 30a interagissent selon la ligne 22 avec la même cible 10 périphérique, en haut à droite de la figure 2. Au centre de l'attraction, les émetteurs 52 d'un troisième véhicule 20a interagissent selon la ligne 22 avec la même cible 11 centrale que les émetteurs 52 d'un véhicule 20b de la paire. Sur la figure 2, deux véhicules 20 d'un même support 30 forment une paire, le troisième véhicule 20 du support formant une paire avec le véhicule d'un autre support 30. En outre, sur la figure 2, on voit que les cibles 11, 12 centrales ont pivoté sur elles-mêmes pour offrir différents angles d'interaction avec les émetteurs 52.

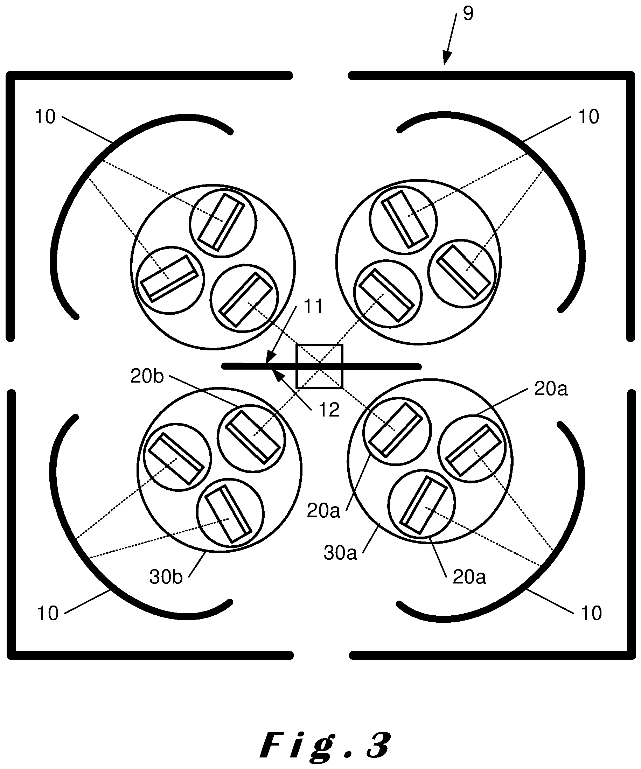

Sur la figure 3, les véhicules ont été déplacés jusqu'à une nouvelle position fixe, telle que les supports sont décalés d'environ 45°. A nouveau, le déplacement des supports 30 et des véhicules 20 peut être plus important qu'un simple décalage des supports de 45°. Les véhicules 20 et les supports 30 peuvent se déplacer durant plusieurs secondes ou minutes selon un mouvement aléatoire pour aboutir à la position de la figure 3. Au centre de l'attraction, les émetteurs 52 d'un premier véhicule 20a interagissent selon la ligne 22 avec la même cible 12 centrale que les émetteurs 52 d'un véhicule 20b de la paire. Sur la figure 3, les émetteurs 52 d'un deuxième et troisième véhicules 20a du même support 30a interagissent selon la ligne 22 avec la même cible 10 périphérique, en bas à droite de la figure 3. Sur la figure 3, deux véhicules 20 d'un même support 30 forment une paire, le troisième véhicule 20 du support formant une paire avec le véhicule d'un autre support 30. En outre, sur la figure 3, on voit que les cibles 11, 12 ont à nouveau pivoté sur elles-mêmes pour offrir différents angles d'interaction avec les émetteurs 52.

La vitesse de déplacement des véhicules peut être constante ou croissante pour augmenter l'intérêt du jeu.

De préférence, les participants activent les émetteurs 52 pour interagir avec une cible différente dans chaque position fixe des véhicules. Ceci augmente l'intérêt de l'attraction. Aussi, dans ces positions fixes, les véhicules forment des paires avec un véhicule différent, ce qui permet aux participants d'un véhicule d'affronter des participants différents au cours du procédé de mise en oeuvre de l'attraction.

Le procédé peut être mis en oeuvre en démarrant par la position fixe et l'activation des émetteurs puis une étape de déplacement ou inversement par une étape de déplacement pour rejoindre une position fixe. Les véhicules sont plusieurs fois en position fixe, selon un nombre variable de fois prédéfini avant le lancement de l'attraction. Ceci est déterminé à l'avance par l'organisateur de l'attraction en fonction du temps de chaque étape et de l'affluence sur l'attraction. L'attraction s'adapte donc facilement à différentes mises en oeuvre. Dans chaque position fixe, les véhicules forment une paire avec un véhicule différent, ce qui augmente le nombre de duels entre équipes différentes sans pour autant augmenter l'encombrement de l'attraction. Par exemple, l'organisateur peut faire en sorte que les véhicules sont au moins trois fois en position fixe pour donner plusieurs occasions aux participants d'interagir avec les cibles ; de préférence les véhicules sont quatre fois en position fixe. Avec trois ou quatre positions fixes, les véhicules forment de préférence une paire avec un véhicule différent, ce qui augmente le nombre de duels entre équipes différentes sans pour autant augmenter l'encombrement de l'attraction.

L'invention se rapporte aussi à un programme d'ordinateur comprenant les instructions qui conduisent l'attraction à exécuter les étapes du procédé décrites. Le programme peut comprendre plusieurs scénarii dans lesquels le nombre de positions fixes varie en fonction de paramètres telle que l'affluence, la durée souhaitée des étapes du procédé, etc. Également, le programme permet de changer l'ambiance au sein de l'enceinte. L'invention se rapport aussi à un support lisible par ordinateur, sur lequel est enregistré ce programme.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus, mais par la définition des revendications.

## Revendications

1. Attraction (9) comprenant
- une pluralité de véhicules (20) mobiles entre plusieurs positions fixes, les véhicules étant destinés à véhiculer des participants de l'attraction ;
- des cibles (10, 11, 12) interactives,
- des émetteurs (52) équipant les véhicules (20) pour interagir avec les cibles ; tel que, dans les positions fixes des véhicules, les émetteurs (52) d'une paire de véhicules sont en interaction avec la même cible ; et tel que dans chaque position fixe des véhicules, chaque véhicule forme une paire avec un véhicule différent.

2. Attraction selon la revendication 1, dans laquelle les participants d'un véhicule (20a) sont visibles par les participants de l'autre véhicule (20b) de la paire de véhicules dans la position fixe des véhicules.

3. Attraction selon l'une des revendications 1 ou 2, dans laquelle, les émetteurs (52) sont des pointeurs laser.

4. Attraction selon l'une des revendications 1 à 3, dans laquelle les véhicules (20) sont mobiles en rotation et/ou en translation.

5. Attraction selon l'une des revendications 1 à 4, comprenant des supports (30a, 30b, 30c, 30d) supportant chacun au moins deux véhicules (20), les supports étant mobiles en rotation et/ou en translation entre les positions fixes des véhicules.

6. Attraction selon la revendication 5, comprenant trois supports, chaque support ayant deux véhicules, de préférence l'attraction comprend quatre supports, chaque support ayant trois véhicules.

7. Attraction selon l'une des revendications 1 à 6, comprenant en outre une plateforme (40) mobile en rotation, entraînant les supports (30) et les véhicules (20).

8. Attraction selon l'une des revendications 1 à 7, dans laquelle les cibles (10, 11, 12) sont des écrans diffusant des images à intercepter avec les émetteurs (52).

9. Attraction selon l'une des revendications 1 à 8, dans laquelle les cibles sont des écrans disposés autour d'une zone de déplacement des véhicules et/ou en hauteur par rapport aux véhicules.

10. Procédé de mise en oeuvre d'une attraction selon l'une des revendications 1 à 9, comprenant les étapes de
- déplacement des véhicules (20) vers une position fixe de sorte que, dans chaque position fixe des véhicules, les véhicules (20) forment des paires avec un véhicule différent,
- dans la position fixe des véhicules, activation des émetteurs (52) d'une paire de véhicules par les participants de ces véhicules pour interagir avec la même cible,
- répétition des étapes précédentes.

11. Procédé selon la revendication 10, dans lequel il y a au moins deux positions fixes dans lesquelles les participants activent les émetteurs (52) pour interagir avec des cibles (10, 11, 12) différentes.

12. Procédé selon la revendication 10 ou 11, dans lequel dans chaque position fixe des véhicules, les émetteurs d'un véhicule sont en interaction uniquement avec la cible (10, 11, 12) partagée avec l'autre véhicule de la paire.

13. Procédé selon l'une des revendications 10 à 12, dans lequel les véhicules (20) prennent au moins trois positions fixes, de préférence quatre positions fixes.

14. Programme d'ordinateur comprenant les instructions qui conduisent l'attraction selon l'une des revendications 1 à 9 à exécuter les étapes du procédé selon l'une des revendications 10 à 13.

15. Support lisible par ordinateur, sur lequel est enregistré le programme selon la revendication 14.

## Patentansprüche

1. Attraktion (9), umfassend:
- eine Vielzahl von zwischen mehreren festen Positionen beweglichen Fahrzeugen (20), wobei die Fahrzeuge dazu bestimmt sind, Teilnehmer der Attraktion transportieren;
- interaktive Ziele (10, 11, 12),
- Emitter (52), die die Fahrzeuge (20) ausstatten, um mit den Zielen zu interagieren;
so, dass in den festen Position der Fahrzeuge die Emitter (52) eines Paars von Fahrzeugen mit dem gleichen Ziel in Interaktion vorliegen;
und so, dass in jeder festen Position der Fahrzeuge jedes Fahrzeug ein Paar mit einem unterschiedlichen Fahrzeug bildet.

2. Attraktion nach Anspruch 1, wobei die Teilnehmer eines Fahrzeugs (20a) von den Teilnehmern des anderen Fahrzeugs (20b) des Paars von Fahrzeugen in der festen Position der Fahrzeuge zu sehen sind.

3. Attraktion nach einem der Ansprüche 1 oder 2, wobei die Emitter (52) Laserpointer sind.

4. Attraktion nach einem der Ansprüche 1 bis 3, wobei die Fahrzeuge (20) rotations- und/oder translationsbeweglich sind.

5. Attraktion nach einem der Ansprüche 1 bis 4, umfassend Träger (30a, 30b, 30c, 30d), die jeweils mindestens zwei Fahrzeuge (20) tragen, wobei die Träger zwischen den festen Positionen der Fahrzeuge rotations- und/oder translationsbeweglich sind.

6. Attraktion nach Anspruch 5, umfassend drei Träger, wobei jeder Träger zwei Fahrzeuge aufweist, wobei die Attraktion vorzugsweise vier Träger umfasst, wobei jeder Träger drei Fahrzeuge aufweist.

7. Attraktion nach einem der Ansprüche 1 bis 6, umfassend des Weiteren eine rotationsbewegliche Plattform (40), die die Träger (30) und die Fahrzeuge (20) antreibt.

8. Attraktion nach einem der Ansprüche 1 bis 7, wobei die Ziele (10, 11, 12) Bildschirme sind, die mit den Emittern (52) abzufangende Bilder ausstrahlen.

9. Attraktion nach einem der Ansprüche 1 bis 8, wobei die Ziele Bildschirme sind, die um einen Bewegungsbereich der Fahrzeuge herum und/oder in Bezug auf die Fahrzeuge in der Höhe angeordnet sind.

10. Verfahren zur Implementierung einer Attraktion nach einem der Ansprüche 1 bis 9, umfassend die Schritte der
- Bewegung der Fahrzeuge (20) in Richtung einer festen Position derart, dass in jeder festen Position der Fahrzeuge die Fahrzeuge (20) Paare mit einem unterschiedlichen Fahrzeug bilden,
- in der festen Position der Fahrzeuge, Aktivierung der Emitter (52) eines Paars von Fahrzeugen durch die Teilnehmer dieser Fahrzeuge, um mit dem gleichen Ziel zu interagieren,
- Wiederholung der vorstehenden Schritte.

11. Verfahren nach Anspruch 10, wobei es mindestens zwei feste Position gibt, in denen die Teilnehmer die Emitter (52) aktivieren, um mit den unterschiedlichen Zielen (10, 11, 12) zu interagieren.

12. Verfahren nach Anspruch 10 oder 11, wobei in jeder festen Position der Fahrzeuge die Emitter eines Fahrzeugs ausschließlich mit dem Ziel (10, 11, 12), das mit dem anderen Fahrzeug des Paars geteilt wird, interagieren.

13. Verfahren nach einem der Ansprüche 10 bis 12, wobei die Fahrzeuge (20) mindestens drei feste Positionen, vorzugsweise vier feste Positionen einnehmen.

14. Computerprogramm, umfassend die Anweisungen, die die Attraktion nach einem der Ansprüche 1 bis 9 dazu bringen, die Schritte des Verfahrens nach einem der Ansprüche 10 bis 13 auszuführen.

15. Durch einen Computer lesbarer Träger, auf dem das Programm nach Anspruch 14 gespeichert ist.

## Claims

1. An attraction (9) comprising:
- a plurality of vehicles (20) capable of moving between several fixed positions, the vehicles being intended to convey participants of the attraction ;
- interactive targets (10, 11, 12),
- transmitters (52) fitted to the vehicles (20) for interacting with the targets;
such that, in the fixed positions of the vehicles, the transmitters (52) of a pair of vehicles interact with the same target;
and such that in each fixed position of the vehicles, each vehicle forms a pair with a different vehicle.

2. The attraction according to claim 1, wherein the participants of one vehicle (20a) are visible to the participants of the other vehicle (20b) of the pair of the vehicles in the fixed position of the vehicles.

3. The attraction according to one of claims 1 or 2, wherein, the transmitters (52) are laser pointers.

4. The attraction according to one of claims 1 to 3, wherein the vehicles (20) are capable of moving in rotation and/or translation.

5. The attraction according to one of claims 1 to 4, comprising supports (30a, 30b, 30c, 30d) each supporting at least two vehicles (20), the supports being capable of moving in rotation and/or translation between the fixed positions of the vehicles.

6. The attraction according to claim 5, comprising three supports, each support having two vehicles, preferably the attraction comprises four supports, each support having three vehicles.

7. The attraction according to one of claims 1 to 6, further comprising a platform (40) mobile in rotation, driving the supports (30) and the vehicles (20).

8. The attraction according to one of claims 1 to 7, wherein the targets (10, 11, 12) are screens displaying images to be intercepted with the transmitters (52).

9. The attraction according to one of claims 1 to 8, wherein the targets are screens arranged around an area of movement of the vehicles and/or at a height with respect to the vehicles.

10. A method for implementing an attraction according to one of claims 1 to 9, comprising the steps of:
- moving the vehicles (20) to a fixed position so that, in each fixed position of the vehicles, the vehicles (20) form pairs with a different vehicle,
- in the fixed position of the vehicles, activating the transmitters (52) of a pair of vehicles by the participants of those vehicles to interact with the same target,
- repeating the previous steps.

11. The method according to claim 10, wherein there are at least two fixed positions in which the participants activate the transmitters (52) to interact with different targets (10, 11, 12).

12. The method according to claim 10 or 11, wherein in each fixed position of the vehicles, the transmitters of one vehicle interact only with the target (10, 11, 12) shared with the other vehicle of the pair.

13. The method according to one of claims 10 to 12, wherein the vehicles (20) take at least three fixed positions, preferably four fixed positions.

14. A computer program comprising instructions that cause the attraction according to one of claims 1 to 9 to perform the steps of the method according to one of claims 10 to 13.

15. A computer-readable medium on which the program according to claim 14 is recorded.
